# FASCICULE DE BREVET EUROPEEN

(11) **EP 2 869 986 B1**
(45) Date de publication et mention de la délivrance du brevet: **19.09.2018**
(21) Numéro de dépôt: 12750609.5
(22) Date de dépôt: 06.07.2012
(51) Int. Cl.: B29C 70/76, B29C 33/10, B29C 33/14, B29C 43/18, B29C 43/36, B29L 31/30

(54) **MOULE POUR FORMER UNE PIECE DE VEHICULE AUTOMOBILE EN MATERIAU POLYMERE**
FORM ZUM FORMEN EINES KRAFTFAHRZEUGBAUTEILS AUS EINEM POLYMERMATERIAL
MOULD FOR FORMING A MOTOR VEHICLE PART FROM A POLYMER MATERIAL

(43) Date de publication de la demande: 13.05.2015
(73) Titulaire: Compagnie Plastic Omnium, 69007 Lyon (FR)
(72) Inventeur: BOSG, Patrick, F-26240 Saint Barthelemy De Vals (FR); SOZET, Jean-Yves, F-07610 Vion (FR); BRIALON, Paul, F-07100 Annonay (FR); BOSC, Arnaud, F-07130 Saint Peray (FR)
(74) Mandataire: Remy, Vincent Noel Paul
(86) Numéro de dépôt international: PCT/FR2012/051609
(87) Numéro de publication internationale: WO 2014/006276

(56) Documents cités:
- CH-A- 355 609
- FR-A1- 2 915 129
- GB-A- 2 160 471
- US-A- 3 090 996

## Description

La présente invention concerne le domaine technique des planchers en matière plastique pour véhicules automobiles.

La fabrication d'un véhicule automobile commence par une étape de ferrage, qui consiste à réaliser une caisse en blanc, en soudant entre elles différentes pièces métalliques, caisse qui est ensuite baignée dans un bain de cataphorèse pour traiter la surface des pièces métalliques et les points de soudure contre la corrosion.

Après passage en cataphorèse, la caisse suit différentes étapes d'assemblage et de peinture, jusqu'à obtention d'un véhicule complet.

On sait par ailleurs que le recours à des pièces en matière plastique dans la constitution d'un véhicule est un facteur de succès dans la recherche de réduction de la consommation en carburant, grâce à l'allègement que procure le remplacement d'une pièce métallique par une pièce en matière plastique, qui est moins dense.

Pourtant, l'existence de chaînes de montage déjà opérationnelles organisées dans l'ordre indiqué précédemment, à savoir d'abord ferrage et cataphorèse, puis peinture et assemblage, rend difficile, voire économiquement impossible, la mise en place de processus de fabrication dans lesquelles cet ordre ne serait pas respecté.

C'est donc pour se conformer aux chaînes de montage existantes qu'il a déjà été proposé de fabriquer des pièces en matière plastique munies d'inserts métalliques permettant de les assembler par soudage à d'autres pièces métalliques lors de l'étape de ferrage. En particulier, dans le document FR2915129, on divulgue un plancher de véhicule automobile comportant des inserts partiellement surmoulés dans une nappe d'AMC (pour Advanced Molding Compound), de BMC (pour Bulk Molding Compound) ou de SMC (pour Sheet Molding Compound), matériau thermodurcissable particulièrement adapté à cette application en raison de sa résistance mécanique et de sa capacité à subir l'étape de cataphorèse sans se dégrader. Les inserts comportent des zones non recouvertes par la matière plastique, sur lesquelles une soudure peut être réalisée, ce qui rend possible l'assemblage du plancher avec d'autres pièces métalliques lors du ferrage.

Le document US 3 090 996 divulgue également un moule adapté pour former une pièce de véhicule automobile en matériau polymère comprenant au moins un insert métallique partiellement surmoulé.

Une des difficultés qui se posent dans la fabrication de pièces en matière plastique thermodurcissable munies d'inserts de soudure surmoulés est que le surmoulage s'accompagne inévitablement de bavures, bavures qu'il faut éliminer en sortie de moule pour éviter toute conséquence néfaste ultérieure. En particulier, les conséquences redoutées d'une absence d'ébavurage sont, sans que cette liste ne soit exhaustive :
- risque de pollution du bain de cataphorèse si les bavures se détachent pendant cette étape ;
- mauvaise efficacité du traitement de cataphorèse en raison d'un masquage partiel de la surface de la pièce métallique à traiter et risque de corrosion si les bavures se détachent ultérieurement ;
- risque de soudures imparfaites en raison d'une couverture partielle de la zone de soudure par la matière plastique électriquement isolante.

Mais l'ébavurage n'est pas sans poser lui-même certaines difficultés. En effet, comme les bavures sont présentes sur les surfaces métalliques laissées apparentes des inserts, l'élimination des bavures par des actions chimiques ou mécaniques telles que découpe, jet-d'eau, soufflage, peut endommager la surface métallique et préparer les conditions d'une corrosion précoce du métal ou de la soudure.

Il existe donc un besoin pour une solution de moulage de pièces en matière plastique thermodurcissable dans laquelle l'élimination des bavures n'engendre pas ces difficultés.

L'invention a pour but de remédier à ces inconvénients en fournissant un moule pour former une pièce de véhicule automobile en matériau polymère comprenant au moins un insert métallique partiellement surmoulé, c'est-à-dire ayant une partie destinée à être recouverte de matériau polymère et une partie destinée à ne pas l'être, la limite entre ces deux parties étant une ligne suivant un bord de l'insert, appelée limite de surmoulage, le moule comprenant une matrice et un poinçon délimitant l'empreinte du moule et étant capables de prendre différentes positions entre :
- une position ouverte dans laquelle l'empreinte du moule est suffisamment ouverte pour permettre la mise en place des inserts et du matériau polymère dans le moule et
- une position de moulage dans laquelle l'empreinte du moule est fermée et définit la forme de la pièce à obtenir,
- en passant par des positions fermées de remplissage dans lesquelles l'empreinte du moule est fermée mais n'a pas encore atteint la position de moulage et le matériau polymère flue dans l'empreinte pour la remplir,
   ledit moule comprenant au moins une zone de calage portée par le poinçon et au moins une zone de calage portée par la matrice pour immobiliser au moins un insert métallique entre lesdites zones de calage lorsque le moule est dans ses positions fermées de remplissage, ainsi que dans sa position de moulage, lesdites zones de calage ayant des faces en regard,
- le moule comprenant au moins une partie mobile apte à coulisser à jeu réduit par rapport à un élément au moins de l'ensemble constitué par la matrice et le poinçon,
**caractérisé en ce qu**'il comprend, sur l'une ou l'autre des faces en regard des zones de calage, au moins une saillie qui est agencée pour exercer sur l'insert, lorsque le moule est dans ses positions fermées de remplissage, ainsi que dans sa position de moulage, une contrainte locale s'étendant sur une zone d'étanchéité incluant intégralement la limite de surmoulage de l'insert, de manière à empêcher que du matériau polymère fluant dans l'empreinte ne franchisse la zone d'étanchéité et ne s'infiltre entre la partie de l'insert destinée à ne pas être recouverte et l'une ou l'autre des faces en regard des zones de calage, **et en ce que** le jeu réduit permettant le coulissement de la partie mobile est en communication avec l'empreinte du moule et forme un évent apte à laisser s'échapper de l'empreinte du moule des gaz et de petites quantités de matériau polymère fluant sous pression dans ladite empreinte.

Pour éviter tout malentendu, on précise que « ne pas s'infiltrer entre la partie de l'insert destinée à ne pas être recouverte et l'une ou l'autre des faces » signifie « ne s'infiltrer ni entre l'insert et l'une des faces, ni entre l'insert et l'autre face ». Autrement dit, aucune infiltration n'est possible sur une face de la partie de l'insert destinée à ne pas être recouverte, quelle que soit la face de l'insert considérée.

Selon l'invention, on entend par « empêcher que du matériau polymère ne franchisse la zone d'étanchéité », le fait de créer une barrière retenant le matériau polymère dans des conditions normales de fabrication de la pièce de véhicule automobile. Cela n'exclut pas que des fuites puissent se produire occasionnellement lorsque les conditions du moulage sont modifiées ou si une usure des pièces provoque des fuites, mais de telles fuites doivent rester exceptionnelles et ne pas correspondre à un régime normal d'utilisation du moule. En outre, cela n'exclut pas non plus des fuites au niveau des raccordements des inserts métalliques, notamment s'ils se chevauchent partiellement.

Par « contrainte locale s'étendant sur une zone d'étanchéité incluant intégralement la limite de surmoulage », on entend que l'insert subit une pression sur une région qui occupe une partie de sa largeur (d'où le qualificatif « locale ») et s'étend continûment sur toute sa longueur, de manière qu'il n'existe pas d'endroit, sur toute la longueur de la limite de surmoulage, où cette pression disparaîtrait et permettrait le passage du matériau polymère fluant sous pression dans le moule. Selon l'invention, cette caractéristique n'exige pas que les zones de calage se trouvent en contact continu avec l'insert.

D'après la définition des positions ouverte de moulage et fermée de remplissage, on comprend que le moule selon l'invention est conçu pour que son empreinte se remplisse par fluage du matériau polymère dans un moule dont l'empreinte est d'abord fermée, mais avec un volume supérieur à celui de la pièce à fabriquer (positions fermées de remplissage), puis ramenée aux dimensions de la pièce à fabriquer (position de moulage).

Avantageusement, la partie mobile du moule est coulissante selon la direction de fermeture du moule.

De préférence, le jeu réduit permettant le coulissement de la partie mobile par rapport à un élément au moins de l'ensemble constitué par la matrice et le poinçon est de 0,05 millimètres.

Dans un premier mode de réalisation de l'invention, la partie mobile est au moins une cale mobile comportant une zone de calage, ladite cale étant montée sur ou étant d'un seul tenant avec un cadre mobile porté par le poinçon et entourant, à jeu réduit, ledit poinçon. La cale mobile permet d'immobiliser les inserts avant de fermer le moule, c'est-à-dire avant d'atteindre les positions fermées de remplissage et, à fortiori, la position de moulage. Ainsi, les inserts sont immobilisés dans leur position définitive avant que le matériau polymère ne soit mis en pression pour remplir intégralement l'empreinte du moule et recouvrir partiellement les inserts. Dans ce mode de réalisation, l'évent formé par le jeu réduit se trouve entre le cadre mobile et le poinçon.

Dans un second mode de réalisation, la partie mobile du moule est au moins un noyau mobile du poinçon et/ou de la matrice, qui peut être soit positionné en retrait pour donner à l'empreinte un volume supérieur à celui de la pièce à fabriquer, soit positionné en avant pour donner à l'empreinte du moule les dimensions de la pièce à obtenir. Le noyau mobile sert à mettre en pression et à faire fluer le matériau polymère après fermeture du moule, c'est-à-dire dès que le moule est en position fermée de remplissage, de manière à remplir intégralement l'empreinte du moule jusqu'à atteindre la position de moulage.

Grâce à l'invention, aucune bavure de matériau polymère ne peut se former sur les parties découvertes des inserts, puisque le ou les évents ne sont pas en communication avec les parties découvertes des inserts. Ces inserts sont donc prêts à servir de zones de soudure lors du ferrage de la caisse en blanc et à subir le traitement de cataphorèse subséquent.

Grâce à l'invention, un évent ne peut pas se former entre les inserts et l'une ou l'autre des faces en regard des zones de calage du moule. Les gaz contenus dans l'empreinte, ainsi que d'éventuelles petites quantités de matériau polymère fluant dans l'empreinte et formant des bavures sur la pièce, sont donc forcés à sortir de l'empreinte par le ou les évents formés par le jeu réduit de coulissement de la partie mobile, évents qui débouchent dans l'empreinte ailleurs que sur les parties des inserts situées entre les zones de calage.

Les bavures présentes sur la pièce moulée et issues de l'introduction de matériau polymère dans les évents du moule peuvent donc être facilement retirées par des actions mécaniques ou chimiques sans risque d'endommagement des inserts, puisqu'elles sont dissociées des inserts. Cette opération de retrait est encore plus facile à réaliser si les bavures sont perpendiculaires au plan général de la pièce moulée.

Dans un mode de réalisation particulier, l'une et l'autre des faces en regard des zones de calage comportent au moins une saillie. L'insert se retrouve alors pincé entre deux saillies, qui peuvent être en regard l'une de l'autre ou décalées, en fonction de l'épaisseur de l'insert.

Dans un mode de réalisation particulier, la ou les saillies des faces en regard des zones de calage sont périphériques à l'empreinte du moule.

Dans un mode de réalisation particulier, les sommets de la ou des saillies se trouvent à hauteur constante selon la direction de fermeture du moule.

Dans un autre mode de réalisation, seule une face des faces en regard des zones de calage comporte une saillie. A l'opposé de cette saillie, l'insert est comprimé contre la face dépourvue de saillie de l'autre face. La réaction de cette face sur l'insert est toutefois suffisante pour créer une contrainte locale continue assurant le résultat souhaité, c'est-à-dire créer une barrière pour le matériau polymère fluant dans l'empreinte pendant le moulage.

L'invention a également pour objet un procédé de fabrication d'une pièce de véhicule automobile. Ce procédé est **caractérisé en ce qu'**il comprend au moins une étape de moulage utilisant un moule tel que défini ci-dessus.

Une pièce obtenue par ce procédé est facilement reconnaissable grâce à la netteté de la limite de surmoulage, qui interrompt le front de matière plastique sur la partie découverte des inserts métalliques et, surtout, grâce à la trace laissée par la saillie sur ces inserts.

Dans un mode de réalisation particulier, la pièce est réalisée en un matériau thermodurcissable de type AMC (acronyme anglais de Advanced Moulding Compound), en BMC (acronyme anglais de Bulk Moulding Compound ou en SMC (acronyme anglais de Sheet Moulding Compound) ou en un matériau thermoplastique, plus particulièrement à base de polyamide (PA) ou de polypropylène (PP).

L'invention sera mieux comprise à la lecture des figures annexées, qui sont fournies à titre d'exemples ne présentant aucun caractère limitatif et dans lesquelles :
La figure 1 est un ensemble de six schémas représentant un moule au cours d'une mise en oeuvre du procédé selon l'invention.
La figure 2 est une vue en perspective d'un insert latéral d'un plancher représenté à la figure 9.
La figure 3 est une vue en perspective d'un insert avant du plancher de la figure 8.
La figure 4 est une vue en perspective d'un insert arrière du plancher de la figure 8.
La figure 5 est une vue en coupe d'une partie du moule.
La figure 6 est une vue en perspective d'un insert central positionnable dans le moule.
La figure 7 est une vue en coupe d'une partie du moule.
La figure 8 est un agrandissement local de la zone VIII de la figure 7.
La figure 9 est une vue en perspective d'un plancher obtenu par moulage à l'aide des éléments des figures précédentes.
La figure 10 est un ensemble de trois variantes de section d'une saillie d'un insert.
La figure 11 est un ensemble de six schémas représentant un moule au cours d'une autre mise en oeuvre du procédé selon l'invention.

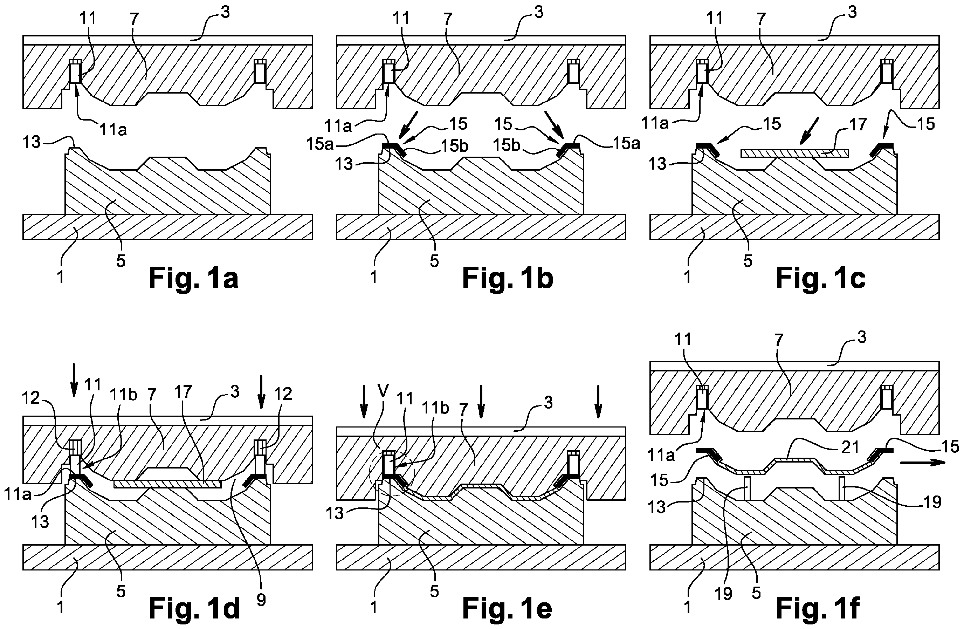

On se réfère maintenant à la figure 1, qui comprend six schémas a, b, c, d, e, f représentant un moule en deux parties lors de six étapes successives d'un procédé de fabrication d'une pièce en matériau polymère.

Le moule est monté sur une presse (non représentée) ayant un plateau fixe 1 et un plateau mobile 3.

Le moule comprend une matrice 5, qui est montée sur le plateau fixe 1 de la presse, et un poinçon 7, monté sur le plateau mobile 3.

Le moule est du type à chambre de compression, ce qui signifie que, pendant son mouvement de fermeture depuis sa position ouverte (étapes a, b ,ç sur la figure 1), il arrive un moment où l'empreinte du moule est un espace fermé 9, comme on le voit sur le schéma d. A ce moment, le moule est dans une position fermée de remplissage. L'espace 9 a bien entendu un volume supérieur à celui de l'empreinte du moule, qui est définie lorsque le moule a atteint la position de moulage, et qui correspond à la pièce finie. Pendant toutes les positions fermées de remplissage et jusqu'à la position de moulage (étape e), le poinçon 7 coulisse comme un piston le long d'une surface qui délimite une chambre de compression. L'étanchéité du moule vis-à-vis de la matière qui flue dans le moule pour réaliser la pièce finie est en principe assurée au niveau de la chambre de compression.

Dans le cas du moule de la figure 1, la surface délimitant la chambre de compression est constituée par une cale mobile périphérique 11, qui peut prendre une position rentrée (étape a) dans la partie mobile 3 de la presse et une position sortie (étape d). Cette cale mobile 11, qui, bien que dessinée d'un seul tenant, peut être en plusieurs morceaux, remplit deux fonctions.

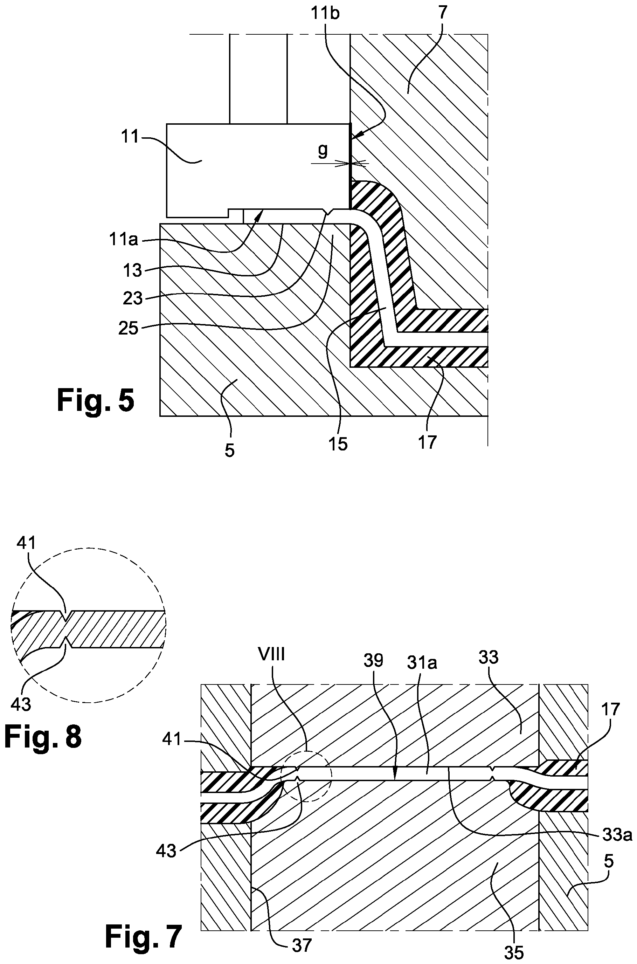

D'une part, elle constitue, par sa face intérieure 11b, la surface précitée contre laquelle coulisse le poinçon 7. A cet effet, un jeu g de 0,05 mm (voir figure 5) est laissé entre la surface intérieure 11b de la cale mobile 11 et le poinçon 7. Ce jeu permet en outre d'assurer une fonction d'évent, permettant à des gaz emprisonnés dans l'empreinte de s'échapper pendant le remplissage du moule par le matériau polymère.

D'autre part, par sa face inférieure 11a, la cale 11 forme, avec une zone de calage ayant une face 13 prévue sur la matrice 5, en regard de la face 11a de cale mobile 11, un moyen d'immobilisation d'un ou plusieurs inserts qui seront décrits ultérieurement. La cale mobile 11 est d'un seul tenant avec un cadre qui est monté sur des vérins 12 portés par le poinçon 7 de manière à pouvoir se rapprocher de la zone de calage 13 avant que le poinçon 7 ne s'engage par coulissement dans la chambre de compression. Dans une variante non représentée, la cale est une pièce distincte du cadre, montée sur la face inférieure de celui-ci.

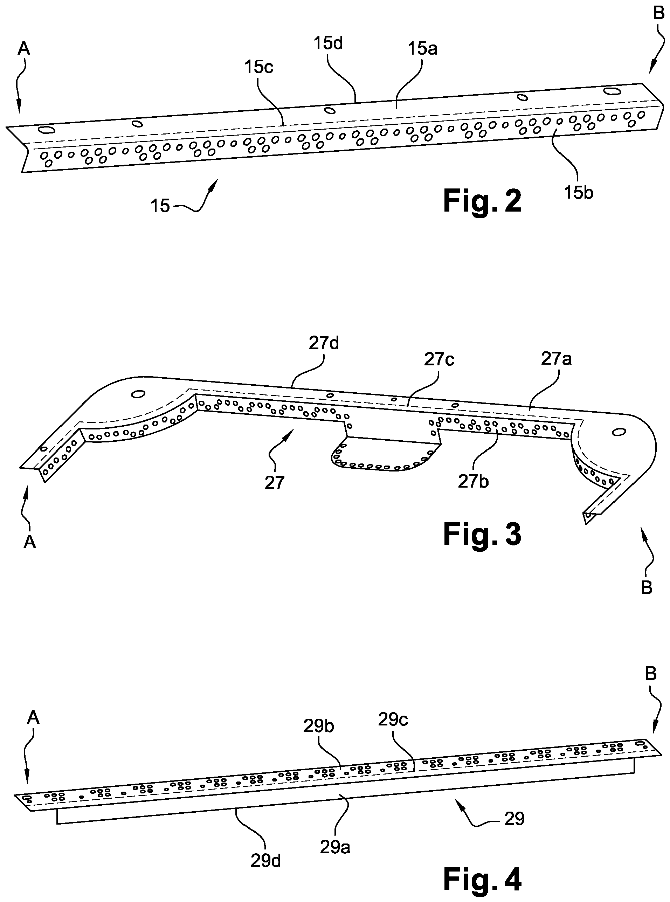

Sur les vues en perspective des figures 2, 3 et 4, on voit des inserts métalliques latéraux 15, respectivement avant 27 et arrière 29, qui sont prévus pour être placés dans le moule en position ouverte. Chaque insert a une forme allongée qui est rectiligne pour l'insert latéral 15 de la figure 2, non rectiligne pour les inserts avant 27 et arrière 29 des figures 3 et 4.

Sur les figures 3 et 4, on voit que chacun des inserts avant 27 et arrière 29 comprend une portion découverte 27a, 29a qui est destinée à être serrée par la cale mobile 11 contre la zone de calage 13 de la matrice 5 et une partie 27b, 29b qui est destinée à être surmoulée par la matière plastique.

Chacun des inserts a des contours et des perçages particuliers qui sont spécifiques au modèle de plancher à obtenir. De même, chaque insert a une section transversale coudée selon un angle particulier qui peut être différent d'un insert à l'autre ou d'un emplacement à l'autre de la longueur d'un même insert. Ces spécificités de forme des inserts ne seront pas décrites en détail dans la présente description.

Comme on le voit sur le schéma b de la figure 1, l'insert latéral 15 est positionné sur la matrice 5 de telle sorte qu'une portion 15a dudit insert recouvre la face 13 de la zone de calage et qu'une portion 15b dudit insert est logée dans l'empreinte du moule. La portion 15b logée dans l'empreinte du moule est une partie de l'insert 15 qui est destinée à être surmoulée tandis que la portion 15a recouvrant la face 13 est une partie qui est destinée à dépasser de la pièce moulée. On désignera « portion découverte » cette dernière portion 15a de l'insert 15. La frontière 15c entre portion 15b destinée à être surmoulée et portion découverte 15a, appelée limite de surmoulage, est une ligne immatérielle schématisée par un trait discontinu sur la figure 2. La même limite de surmoulage 27c existe entre les parties 27a et 27b de l'insert avant 27. Il en va de même avec la limite de surmoulage 29c de l'insert arrière 29.

Les limites de surmoulage 15c, 27c et 29c s'étendent depuis une première extrémité A de chaque insert jusqu'à une extrémité opposée B dudit insert, sans quitter l'insert et en suivant approximativement son bord 15d, 27d, 29d qui n'est pas nécessairement rectiligne.

La matière utilisée pour le moulage est une matière plastique thermodurcissable de type SMC (pour « sheet molding coumpound »). On la dépose dans le moule ouvert, sur la matrice 5, sensiblement au milieu de l'empreinte bien que cela ne soit pas une nécessité, sous la forme d'une ébauche 17, comme cela est connu. L'étape de dépose de la matière dans le moule en position ouverte est illustrée par le schéma c de la figure 1.

En référence à la figure 1, on va maintenant décrire six étapes successives du procédé de moulage selon l'invention.

Lors d'une première étape, illustrée par le schéma a, le moule est en position ouverte : le poinçon 7 est éloigné de la matrice 5 et la cale mobile 11 est rentrée dans le poinçon 7.

Lors d'une seconde étape, illustrée par le schéma b, les inserts avant, latéraux 15 et arrière 29 sont positionnés sur la zone de calage 13 de la matrice.

Lors d'une troisième étape, illustrée par le schéma c, une feuille de SMC 17 est déposée au milieu de l'empreinte, sur la matrice 5. Les deuxième et troisième étapes peuvent être confondues ou réalisées dans un ordre différent.

Lors d'une quatrième étape, non représentée, la partie mobile 3 est rapprochée de la partie fixe 1, mais sans pour autant fermer moule, c'est-à-dire sans qu'aucun des éléments de la moitié supérieure du moule, à savoir le poinçon 7 et la cale mobile 11, ne vienne au contact d'un des éléments de la moitié inférieure du moule, à savoir la matrice 5. Le moule n'a donc pas encore atteint ses positions fermées de remplissage.

Dans une cinquième étape, les vérins 12 sont ensuite actionnés pour faire descendre la cale mobile 11 en direction de la zone de calage 13 de la matrice, comme illustré par le schéma d. Ce faisant, la face 11a de la cale mobile 11 vient prendre appui contre les portions découvertes 15a des inserts avant, latéraux 15 et arrière, bloquant fermement ces derniers en position contre la face 13 de la zone de calage.

Ainsi positionnée, la cale mobile 11 remplit ses deux fonctions : d'une part, elle maintient les inserts en position en vue du remplissage de l'empreinte du moule par fluage de la matière 17, d'autre part, elle constitue une chambre de compression. L'empreinte du moule, délimitée par le poinçon 7, la cale mobile 11 et la matrice 5, est donc fermée, mais ne définit pas encore la forme de la pièce à obtenir. Le moule est en position fermée de remplissage.

Lors d'une sixième étape, illustrée par le schéma e, la partie mobile 3 de la presse poursuit son trajet en direction de la partie fixe 1. Ce faisant, le poinçon 7 poursuit son mouvement en coulissant comme un piston dans la cale 11. La cale 11 demeure immobile en appui contre les inserts 15, tandis que les vérins 12 se replient sans réduire la pression de maintien des inserts. La face intérieure 11b de la cale mobile 11 constitue la paroi latérale de la chambre de compression contre laquelle coulisse le poinçon 7. La réduction de volume de l'empreinte et l'état pâteux du matériau polymère ont pour effet que la matière 17 remplit intégralement l'empreinte du moule par fluage et vient notamment recouvrir les parties 15b des inserts 15 qui sont logées dans l'empreinte du moule. En fin de déplacement du poinçon 7, le moule se trouve en position de moulage. Le volume de l'empreinte entre le poinçon 7, la cale mobile 11 et la matrice 5 est celui de la pièce finie.

Lors d'une septième étape, illustrée par le schéma f, la partie mobile 3 de la presse est mise en mouvement dans le sens de l'ouverture du moule. La cale mobile 11 reste cette fois solidaire du poinçon 7 et remonte avec lui, replaçant ainsi le moule en position complètement ouverte. Des éjecteurs 19, prévus dans la matrice 5, soulèvent la pièce moulée 21. Celle-ci est ensuite dégagée et les éjecteurs 19 rétractés, ce qui permet la reprise d'un cycle de moulage en partant de l'étape illustrée par le schéma a.

On va maintenant reprendre la description des quatrième et cinquième étapes ci-dessus, en référence à la figure 5. Cette figure est une vue de détail de la partie V du schéma de l'étape e. On y reconnaît la face intérieure 11b de la cale mobile 11, qui offre au poinçon 7 une surface de coulissement en ménageant un jeu g. On y voit également que la face inférieure 11a comporte une saillie 23 qui vient mordre dans l'insert 15. Cette saillie 23 est agencée pour créer une contrainte locale continue sur l'insert 15 sur toute sa longueur. Dans le mode de réalisation décrit, la saillie 23 est une nervure en V qui, dans l'exemple décrit, s'étend continûment sur toute la face 11a de la cale mobile 11. Dans un autre exemple (non représenté), la nervure en V pourrait ne pas être continue mais générer une contrainte continue.

Plus précisément, la saillie présente un angle d'ouverture de 90° et une hauteur de 0,2 mm par rapport à la surface 11a. Ces grandeurs sont particulièrement adaptées pour des inserts réalisés en une tôle surmoulée de 0,67 mm avec un acier pour carrosserie de type DC04 + ZE selon la norme NF EN 10152 (indice de qualité XES selon l'ancienne norme NF 36-401).

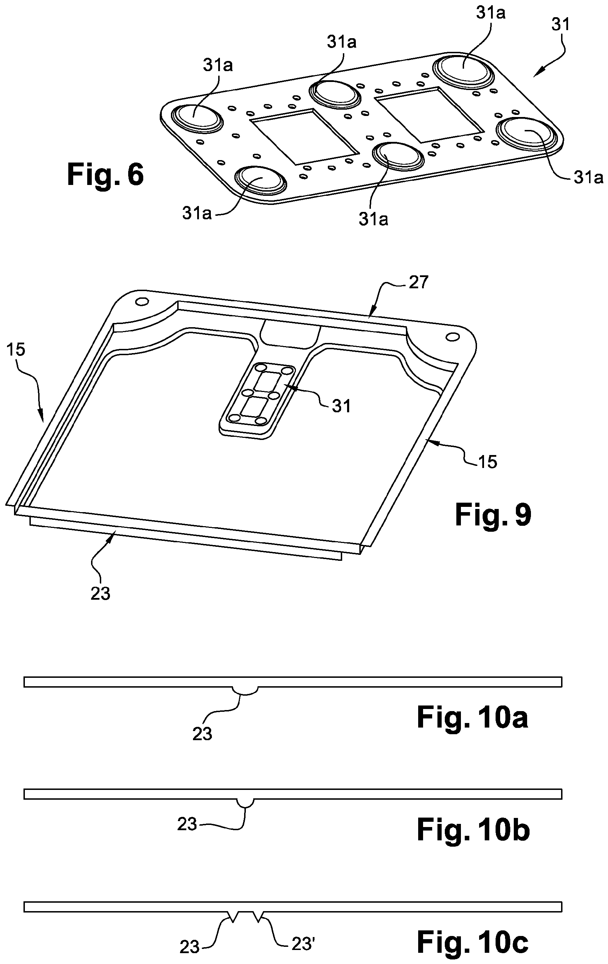

D'autres formes sont également possibles pour la saillie, tant en ce qui concerne la section de la saillie qu'en ce qui concerne sa disposition sur la face 11a de la cale mobile. Par exemple, des plots répartis régulièrement sur la face 11a et créant une contrainte continue sur toute la longueur l'insert 15 pourraient convenir. Cette saillie pourrait avoir une section en V ou autre, telle qu'une section arrondie ou trapézoïdale, illustrées par la figure 10. La saillie peut aussi être doublée d'une deuxième saillie parallèle 23'. A titre d'exemple, la largeur d'une saillie ronde peut être comprise entre 0,4 mm et 0,8 mm avec une hauteur de 0,2 mm.

La contrainte locale créée par la saillie 23 se propage dans l'insert 15 dans toute une région 25 autour de la zone mordue par la saillie. En particulier la contrainte locale a pour effet d'augmenter la pression entre l'insert 15 et la cale mobile 11 mais aussi entre l'insert 15 et la face 13 de la zone de calage de la matrice 5.

Il en résulte que les joints formés, d'une part, entre l'insert 15 et la cale mobile 11, d'autre part, entre l'insert 15 et la zone de calage 13, sont étanches aux gaz et au matériau polymère fluant sous pression dans le moule. On crée donc une zone d'étanchéité entre l'insert et l'une ou l'autre des faces en regard de la cale et de la zone de calage.

En revanche, le jeu g de 0,05 mm entre le poinçon 7 et la face intérieure 11b de la cale mobile 11, qui constitue un évent pour le moule, permet aux gaz et au matériau polymère fluant sous pression dans l'empreinte de s'échapper.

En conséquence, si un échappement de gaz doit se produire dans la région de la cale mobile 11, il ne peut avoir lieu qu'entre la poinçon 7 et la face intérieure 11b de la cale mobile 11 et non entre l'insert 15 et la cale mobile 11, ni entre l'insert 15 et la face 13 de la zone de calage de la matrice 5.

En d'autres termes, le jeu de 0,05 mm entre le poinçon 7 et la face intérieure 11b de la cale mobile 11 constitue un évent débouchant dans l'empreinte et permettant, lors de la fermeture du moule, l'échappement de gaz contenus dans l'empreinte. Mais grâce à la saillie 23, aucun évent ne peut se former dans la portion découverte 15a de l'insert 15.

Compte tenu de la fluidité élevée de la matière plastique thermodurcissable lors de son fluage dans le moule, il n'est pas rare que les évents, qui sont prévus pour l'échappement de gaz, laissent également passer de la matière plastique liquide. Ces passages de matière plastique constituent, après refroidissement et réticulation de la matière, des bavures qu'il faut éliminer.

Grâce à l'invention, les bavures ne peuvent se former que dans le ou les évents du moule. Elles sont donc nettement dissociées des portions découvertes 15a des inserts 15 et leur élimination par ébavurage ne risque pas d'endommager lesdits inserts.

En outre, compte tenu de l'orientation de l'évent, qui est perpendiculaire aux portions découvertes 15a, 27a, 29a des inserts, les bavures pouvant se former sur la pièce sont des films de matière s'étendant perpendiculairement aux portions découvertes des inserts. En conséquence, ces films sont très faciles d'accès, ce qui facilite leur séparation d'avec la pièce, par toute technique d'ébavurage connue. Selon l'invention, il est important que chaque insert comprenne deux parties :
- l'une, destinée à rester découverte, qui sera pincée par la cale mobile 11 et
- l'autre, destinée à être surmoulée par la matière plastique,
avec une limite de surmoulage entre l'une et l'autre partie.

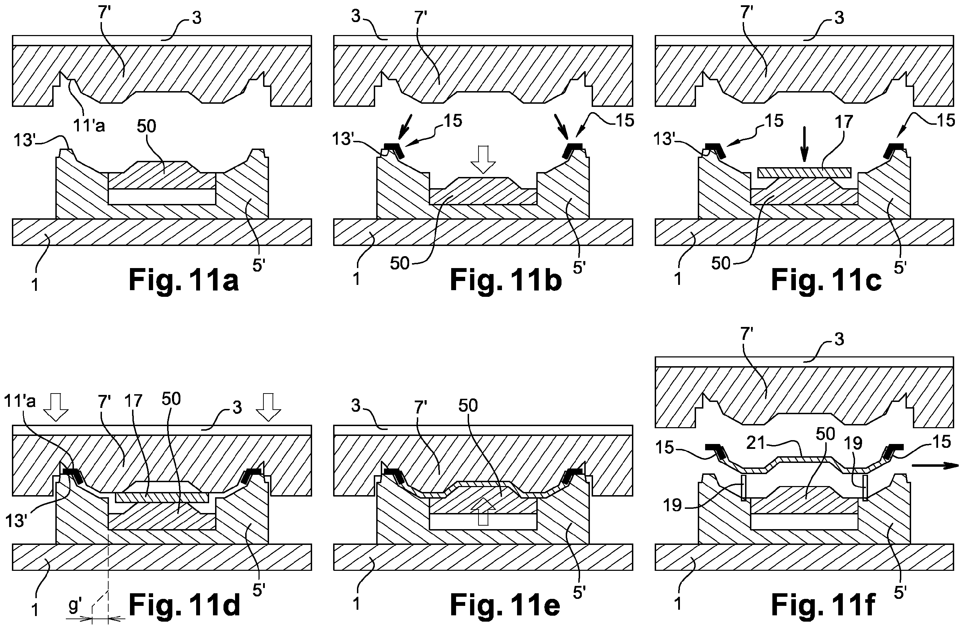

Dans le mode de réalisation de la figure 11, on utilise un moule dont la partie mobile est au moins un noyau mobile 50 du poinçon et/ou de la matrice, qui peut être soit positionné en retrait pour donner à l'empreinte un volume supérieur à celui de la pièce à fabriquer, soit positionné en avant pour donner à l'empreinte du moule les dimensions de la pièce à obtenir.

Ainsi, contrairement au précédent mode de réalisation, la cale n'est pas mobile, mais, ici, la matrice 5' comporte, dans sa partie centrale, un noyau 50 mobile entre deux positions, à savoir :
- une position en retrait dans laquelle il dégage, dans l'empreinte du moule, un volume supplémentaire capable d'accueillir la feuille de matière plastique 17, de sorte que cette feuille n'occupe pas tout le volume de l'empreinte du moule, et
- une position d'affleurement dans laquelle le noyau occupe ce volume supplémentaire.

Un jeu g' de 0,05 mm est ménagé entre le noyau 50 et la matrice 5' et constitue un évent permettant l'échappement des gaz emprisonnés dans l'empreinte lors de son remplissage par le matériau polymère.

Une zone de calage est constituée par un épaulement 11a' du poinçon 7' et une autre zone de calage 13' est la même que sur la matrice de la figure 1.

On exécute d'abord les étapes des schémas a, b et c, comme déjà expliqué en référence à la figure 1. A l'étape a, le noyau mobile 50 est en position d'affleurement. On le place en position de retrait à l'étape b puis, à l'étape c, on dépose la feuille 17 de SMC. L'ordre des étapes a, b et c pourrait être différent sans sortir du cadre de l'invention. Ensuite, la fermeture du moule se fait alors que le noyau 50 est en position de retrait, comme illustré par le schéma d. Cette fermeture n'a pour effet que d'amener la zone de calage 11'a en appui contre les inserts 15 pour les immobiliser en position.

Le fluage du matériau polymère et le remplissage de l'empreinte du moule résultent du passage du noyau mobile 50 en position d'affleurement, comme illustré par le schéma e. Les gaz enfermés dans l'empreinte doivent alors s'échapper par des évents. L'un de ces évents est le jeu g' formé entre le noyau mobile 50 et la matrice 5'. Comme dans le mode de réalisation précédent, les évents sont dissociés des surfaces de contact entre les inserts et, d'une part la zone de calage 11a', d'autre part l'autre zone de calage 13' de la matrice 5', de sorte que les éventuelles bavures de matière qui résultent d'un passage de matériau polymère dans l'évent se produisent en des endroits éloignés des inserts.

En outre, l'orientation de l'évent perpendiculaire au plan général de la pièce facilite l'élimination des bavures.

Comme dans le mode de réalisation précédent, le cycle se termine par l'ouverture du moule et l'éjection de la pièce. Le moulage d'une nouvelle pièce peut reprendre, à partir de l'étape a.

Sur la figure 6, on voit un insert central 31 qui est prévu pour être déposé à l'intérieur du moule, au milieu de la matrice 5 de la figure 1 et qui ne se trouve donc pas en périphérie de la pièce finie.

Cet insert 31 comprend six parties 31a qui ne doivent pas être couvertes par du matériau polymère lors du surmoulage et des parties 31b destinées à être surmoulées, c'est-à-dire noyées dans la matière plastique lors du surmoulage.

Pour surmouler cet insert 31, comme représenté sur la vue en coupe de la figure 7, on ajoute au poinçon 7 du moule précédemment décrit des cales mobiles 33 montées, comme la cale mobile 11, sur des vérins (non représentés). Chaque cale mobile 33 comporte une face inférieure 33a constituant une zone de calage destinée à accueillir la face supérieure d'une partie 31a de l'insert central 31. Sur la matrice 5, on ajoute des plots 35 en regard des cales mobiles 33 du poinçon 7. Les plots 35 sont engagés à force dans des orifices 37 ménagés dans la matrice 5. Le fait que la matrice 5 et les plots 35 soient des pièces distinctes n'est justifié que par un souci de fabrication, de mise au point et de maintenance, mais n'a pas de lien direct avec le procédé de l'invention. On considérera que les plots 35 font partie intégrante de la matrice 5.

Chaque plot 35 comporte une face supérieure 39 constituant une zone de calage destinée à accueillir la face inférieure d'une partie 31a de l'insert central 31.

Comme on le voit sur la figure 7, la face inférieure 33a de chaque cale mobile 33 et la face supérieure 39 de chaque plot 35 sont chacune munie d'une saillie circonférentielle 41, respectivement 43. Les saillies 41 et 43 se trouvent en regard l'une de l'autre. Dans une variante non représentée, les saillies 41 et 43 sont décalées l'une par rapport à l'autre. Ces deux dispositions seront choisies en fonction notamment de l'épaisseur de l'insert et de la nature de l'acier dont il est constitué, afin de de ne pas le sectionner lors de la fermeture du moule.

Dans l'exemple décrit sur cette figure 7, les saillies présentent une forme en V avec un angle d'ouverture de 120° et une hauteur de 0,2 mm.

Grâce aux saillies 41 et 43, on crée une zone d'étanchéité entre l'insert et l'une ou l'autre des faces en regard de la cale et de la zone de calage, zone d'étanchéité au-delà de laquelle le matériau polymère ne s'infiltre pas.

Le surmoulage de l'insert central 31 se produit dans un moule comportant par ailleurs des évents qui sont, comme précédemment expliqué, formés par une partie mobile du moule distante des inserts.

Comme précédemment, les zones découvertes 31a de l'insert central sont particulièrement nettes et ne comportent aucune bavure de matière plastique.

Sur la figure 9, on a représenté en perspective la pièce obtenue par moulage comprenant les inserts avant, latéraux, arrière et central précédemment décrits.

Dans un mode de réalisation particulier, la pièce réalisée peut être un plancher. A titre indicatif, un tel plancher présente une longueur de 1000 mm, une largeur de 800 mm et une profondeur variable qui est inférieure à 100 mm, pour les planchers, dits plats, et une profondeur de 400 mm pour les planchers adaptés pour recevoir une roue de secours ou tout autre composant volumineux tel qu'une batterie par exemple.

On voit que chaque insert a ses parties 15a, 27a, 29a, 31a découvertes, c'est-à-dire non surmoulées, proprement délimitées grâce aux saillies 23, 41 et 43. Les éventuelles bavures qui se sont formées sur la pièce pendant le moulage sont limitées à la périphérie de la pièce et s'étendent perpendiculairement aux inserts, puisqu'elles sont issues du plan de joint formé par la face interne 11b de la cale mobile 11.

L'invention n'est pas limitée aux modes de réalisation présentés et d'autres modes de réalisation apparaîtront clairement à l'homme du métier. Notamment, la forme des saillies 23, 41, 43 peut être différente pourvu qu'elle n'altère pas la base de l'invention.

## Revendications

1. Moule pour former une pièce de véhicule automobile en matériau polymère (17) comprenant au moins un insert métallique (15, 27, 29, 31) partiellement surmoulé, c'est-à-dire ayant une partie (15b, 27b, 29b) destinée à être recouverte de matériau polymère et une partie destinée à ne pas l'être, la limite entre ces deux parties étant une ligne suivant un bord de l'insert, appelée limite de surmoulage (15c, 27c, 29c), le moule comprenant une matrice (5 ; 5') et un poinçon (7 ; 7') délimitant l'empreinte du moule et étant capables de prendre différentes positions entre :
- une position ouverte dans laquelle l'empreinte du moule est suffisamment ouverte pour permettre la mise en place des inserts et du matériau polymère dans le moule et,
- une position de moulage dans laquelle l'empreinte du moule est fermée et définit la forme de la pièce à obtenir,
en passant par des positions fermées de remplissage dans lesquelles l'empreinte du moule est fermée mais n'a pas encore atteint la position de moulage et le matériau polymère flue dans l'empreinte pour la remplir,
ledit moule comprenant au moins une zone de calage (11 ; 11a') portée par le poinçon et au moins une zone de calage (13 ; 13') portée par la matrice pour immobiliser au moins un insert métallique (15, 27, 29, 31) entre lesdites zones de calage lorsque le moule est dans ses positions fermées de remplissage, ainsi que dans sa position de moulage, lesdites zones de calage ayant des faces en regard,
le moule comprenant sur l'une ou l'autre des faces en regard des zones de calage (11 ; 11a', 13 ; 13'), au moins une saillie (23 ; 41, 43) qui est agencée pour exercer sur l'insert, lorsque le moule est dans ses positions fermées de remplissage, ainsi que dans sa position de moulage, une contrainte locale s'étendant sur une zone d'étanchéité incluant intégralement la limite de surmoulage (15c, 27c, 29c) de l'insert, de manière à empêcher que du matériau polymère fluant dans l'empreinte ne franchisse la zone d'étanchéité et ne s'infiltre entre la partie de l'insert (15, 27, 29, 31) destinée à ne pas être recouverte et l'une ou l'autre des faces en regard des zones de calage (11 ; 11a', 13 ; 13'), **caractérisé en ce que** le moule comprend au moins une partie mobile apte à coulisser à jeu réduit par rapport à un élément au moins de l'ensemble constitué par la matrice (5 ; 5') et le poinçon (7 , 7'), et **en ce que** le jeu réduit permettant le coulissement de la partie mobile (11 ; 50) est en communication avec l'empreinte du moule et forme un évent apte à laisser s'échapper de l'empreinte du moule des gaz et de petites quantités de matériau polymère (17) fluant sous pression dans ladite empreinte.

2. Moule selon la revendication 1, dont la partie mobile (11 ; 50) est coulissante selon la direction de fermeture du moule.

3. Moule selon l'une quelconque des revendications 1 et 2, dans lequel le jeu (g ; g') réduit permettant le coulissement de la partie mobile (11 ; 50) par rapport à un élément au moins de l'ensemble constitué par la matrice (5') et le poinçon (7) est d'environ 0,05 millimètres.

4. Moule selon l'une quelconque des revendications 1 à 3, dans lequel la partie mobile est au moins une cale mobile (11) comportant une zone de calage, ladite cale étant montée sur ou étant d'un seul tenant avec un cadre mobile porté par le poinçon et entourant, à jeu (g) réduit, ledit poinçon (7).

5. Moule selon l'une quelconque des revendications 1 à 3, dans lequel la partie mobile est au moins un noyau mobile (50) du poinçon et/ou de la matrice (5'), qui peut être soit positionné en retrait pour donner à l'empreinte un volume supérieur à celui de la pièce à fabriquer, soit positionné en avant pour donner à l'empreinte du moule les dimensions de la pièce à obtenir.

6. Moule selon l'une quelconque des revendications 1 à 5, dans lequel l'une et l'autre des faces en regard des zones de calage (11a', 13') comportent au moins une saillie (41, 43).

7. Moule selon l'une quelconque des revendications 1 à 6, dans lequel la ou les saillies (41, 43) des faces en regard des zones de calage (11a', 13') sont périphériques à l'empreinte du moule.

8. Moule selon l'une quelconque des revendications 1 à 7, dans lequel les sommets de la ou des saillies (41, 43) se trouvent à hauteur constante selon la direction de fermeture du moule.

9. Moule selon l'une quelconque des revendications 1 à 8, dans lequel seule une face des faces en regard des zones de calage (11, 13) comporte une saillie (23).

10. Procédé de fabrication d'une pièce de véhicule automobile, **caractérisé en ce qu'**il comprend au moins une étape de moulage utilisant un moule selon l'une quelconque des revendications 1 à 9.

## Patentansprüche

1. Form zum Formen eines Kraftfahrzeugbauteils aus einem Polymermaterial (17), umfassend mindestens einen teilweise angeformten Metalleinsatz (15, 27, 29, 31), das heißt, dieser weist einen Teil (15b, 27b, 29b) auf, der dazu bestimmt ist, mit Polymermaterial bedeckt zu werden, und einen Teil, der dazu bestimmt ist, nicht bedeckt zu werden, wobei die Grenze zwischen diesen beiden Teilen eine Linie ist, die einem Rand des Einsatzes folgt und als Grenze der Umspritzung (15c, 27c, 29c) bezeichnet wird, wobei die Form eine Matrize (5, 5') und eine Punze (7, 7') umfasst, die den Abdruck der Form eingrenzen und verschiedene Positionen einnehmen können zwischen:
- einer geöffneten Position, in welcher der Abdruck der Form ausreichend geöffnet ist, um das Einbringen von Einsätzen und von Polymermaterial in die Form zu ermöglichen, und
- einer Position der Form, in welcher der Abdruck der Form geschlossen ist und welche die Form des Stückes, das man erhält, definiert,
wobei sie geschlossene Befüllungspositionen durchläuft, in denen der Abdruck der Form geschlossen ist, aber noch nicht die Formungsposition erreicht hat, und wobei das Polymermaterial in den Abdruck fließt, um ihn auszufüllen,
wobei die Form mindestens einen Verkeilungsbereich (11, 11a'), der von der Punze getragen wird, und mindestens einen Verkeilungsbereich (13, 13') umfasst, der von der Matrize getragen wird, um mindestens einen Metalleinsatz (15, 27, 29, 31) zwischen den Verkeilungsbereichen festzustecken, wenn die Form sich in den geschlossenen Positionen ihrer Befüllung befindet, ebenso wie in ihrer Formungsposition, wobei die Verkeilungsbereiche gegenüberliegende Flächen haben,
wobei die Form an der einen oder der anderen der den Verkeilungsbereichen (11, 11a', 13, 13a') gegenüberliegenden Flächen mindestens einen Vorsprung (23, 41, 43) umfasst, der angeordnet ist, auf den Einsatz zu wirken, wenn die Form sich in ihren geschlossenen Befüllungspositionen befindet, ebenso wie in ihrer Formungsposition, wobei eine lokale Einschränkung sich in einen Abdichtungsbereich erstreckt, die integral die Grenze der Umspritzung (15c, 27c, 29c) des Einsatzes einschließt, um zu verhindern, dass das in den Abdruck fließende Polymermaterial den Abdichtungsbereich nicht überschreitet und nicht zwischen dem Einsatzteil (15, 27, 29, 31), der dazu bestimmt ist, nicht bedeckt zu werden, und die eine oder die andere der den Verkeilungszonen (11, 11a', 13, 13') gegenüberliegenden Flächen eindringt, **dadurch gekennzeichnet, dass** die Form mindestens einen beweglichen Teil umfasst, der geeignet ist, mit reduziertem Spiel bezogen auf ein Element mindestens aus der von der Matrize (5, 5') und der Punze (7, 7') gebildeten Gesamtheit zu gleiten, **derart, dass** das reduzierte Spiel, welches das Gleiten des beweglichen Teils (11, 50) ermöglicht, in Kommunikation mit dem Abdruck der Form steht und ein Luftloch formt, das geeignet ist, aus dem Abdruck der Form Gase und kleine Menge des Polymermaterials (17), das unter Druck in den Abdruck fließt, entweichen zu lassen.

2. Form nach Anspruch 1, deren beweglicher Teil (11, 50) gleitend in Richtung der Schließung der Form ist.

3. Form nach einem der Ansprüche 1 und 2, in dem das reduzierte Spiel (g, g'), welches das Gleiten des beweglichen Teils (11, 50) bezogen auf ein Element zumindest aus der von der Matrize (5) und der Punze (7) gebildeten Gesamtheit ermöglicht, etwa 0,05 Millimeter beträgt.

4. Form nach einem der Ansprüche 1 bis 3, bei welcher der bewegliche Teil zumindest ein beweglicher Keil (11) ist, der einen Verkeilungsbereich umfasst, wobei der Keil auf einen Halter montiert ist oder ein einziger Halter ist, mit einem beweglichen Rahmen, der durch die Punze getragen wird und in reduziertem Spiel (g) die Punze (7) umgibt.

5. Form nach einem der Ansprüche 1 bis 3, bei welcher der bewegliche Teil zumindest ein beweglicher Kern (50) der Punze und/oder der Matrize (5') ist, der entweder im Rückzug positioniert sein kann, um dem Abdruck ein größeres Volumen als das des herzustellenden Bauteils zu verleihen, oder nach vorn positioniert sein kann, um dem Abdruck der Form die Dimensionen des Bauteils zu verleihen, das man erhalten möchte.

6. Form nach einem der Ansprüche 1 bis 5, bei welcher die eine und die andere den Verkeilungsbereichen (11a', 13') gegenüberliegende Fläche mindestens einen Vorsprung (41, 43) umfassen.

7. Form nach einem der Ansprüche 1 bis 6, in welcher der oder die Vorsprünge (41, 43) der Flächen gegenüber den Verkeilungsbereichen (11a', 13') peripher zu dem Abdruck der Form sind.

8. Form nach einem der Ansprüche 1 bis 7, in welcher die Scheitelpunkte des Vorsprungs oder der Vorsprünge (41, 43) sich in konstanter Höhe in Richtung der Schließung der Form befinden.

9. Form nach einem der Ansprüche 1 bis 8, in welcher nur eine Fläche der Flächen gegenüber dem Verkeilungsbereich (11, 13) einen Vorsprung (23) umfasst.

10. Verfahren zur Herstellung eines Kraftfahrzeugbauteils, **dadurch gekennzeichnet, dass** es zumindest einen Formungsschritt umfasst, bei dem eine Form nach einem der Ansprüche 1 bis 9 verwendet wird.

## Claims

1. Mould for forming a motor vehicle part from a polymer material (17) comprising at least a partially overmoulded metal insert (15, 27, 29, 31), in other words having a portion (15b, 27b, 29b) intended to be covered with polymer material and a portion intended to be left uncovered, the limit between these two portions being a line along an edge of the insert, called the overmoulding limit (15c, 27c, 29c), the mould comprising a die (5; 5') and a punch (7; 7') defining the mould cavity and being capable of taking different positions between:
- an open position in which the mould cavity is sufficiently open to allow the introduction of the inserts and of the polymer material in the mould, and
- a moulding position in which the mould cavity is closed and defines the shape of the part to be obtained,
as well as closed filling positions in which the mould cavity is closed but has not yet reached the moulding position and the polymer material flows into the cavity to fill it, said mould comprising at least one blocking area (11; 11a') carried by the punch and at least one blocking area (13; 13') carried by the die to immobilise at least one metal insert (15, 27, 29, 31) between said blocking areas when the mould is in its closed filling positions, and in its moulding position, said blocking areas having opposite faces, the mould comprising on one of the opposite faces of the blocking areas (11; 11a', 13; 13'), at least one projection (23; 41, 43) which is arranged to exert on the insert, when the mould is in its closed filling positions, and in its moulding position, a local stress extending over a sealing area completely including the insert overmoulding limit (15c, 27c, 29c), so as to prevent the polymer material flowing in the cavity from crossing the sealing area and from seeping between the part of the insert (15, 27, 29, 31) intended to not be covered and one of the opposite faces of the blocking areas (11; 11a', 13; 13'), **characterized in that** the mould comprises at least one movable part capable of sliding with reduced gap with respect to at least one component of the assembly composed of the die (5; 5') and the punch (7; 7'), **and in that** the reduced gap allowing the movable part (11; 50) to slide communicates with the mould cavity and forms a vent adapted to allow gases and small quantities of polymer material (17) flowing under pressure in said cavity to escape from the mould cavity.

2. Mould according to claim 1, whose movable part (11; 50) can slide in the mould closing direction.

3. Mould according to any of claims 1 or 2, wherein the reduced gap (g; g') allowing the movable part (11; 50) to slide with respect to at least one component of the assembly composed of the die (5') and the punch (7) is about 0.05 mm.

4. Mould according to any of claims 1 to 3, wherein the movable part is at least one movable block (11) having a blocking area, said block being attached to or formed in a single piece with a movable frame carried by the punch and surrounding said punch (7) with reduced gap (g).

5. Mould according to any of claims 1 to 3, wherein the movable part is at least one movable core (50) of the punch and/or of the die (5'), which can either be retracted to give the cavity a volume greater than that of the part to be manufactured or advanced to give the mould cavity the dimensions of the part to be obtained.

6. Mould according to any of claims 1 to 5, wherein both opposite faces of the blocking areas (11a', 13') comprise at least one projection (41, 43).

7. Mould according to any of claims 1 to 6, wherein the projection(s) (41, 43) of the opposite sides of the blocking areas (11a', 13') are peripheral to the mould cavity.

8. Mould according to any of claims 1 to 7, wherein the tops of the projection(s) (41, 43) are at constant height in the mould closing direction.

9. Mould according to any of claims 1 to 8, wherein only one of the opposite faces of the blocking areas (11, 13) has a projection (23).

10. Method for manufacturing a motor vehicle part, **characterised in that** it comprises at least one moulding step using a mould according to any of claims 1 to 9.
